(19) Europäisches Patentamt
European Patent Office
Office européen des brevets

(11) **EP 4 687 273 A1**

(12) **DEMANDE DE BREVET EUROPEEN**

(43) Date de publication:
**04.02.2026 Bulletin 2026/06**

(21) Numéro de dépôt: **25192786.9**

(22) Date de dépôt: **30.07.2025**

(51) Classification Internationale des Brevets (IPC):
**H02M 1/00** (2006.01)   **H02M 7/219** (2006.01)
**H02M 1/10** (2006.01)

(52) Classification Coopérative des Brevets (CPC):
**H02M 7/219; H02M 1/0025;** H02M 1/10;
H02M 7/4833

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **02.08.2024 FR 2408627**

(71) Demandeur: **Valeo eAutomotive Germany GmbH
91056 Erlangen (DE)**

(72) Inventeurs:
• **GUENOUNE, Ibrahim
95892 CERGY PONTOISE (FR)**
• **COULIBALY, Moctar
95892 CERGY PONTOISE (FR)**

(74) Mandataire: **Valeo Powertrain Systems
Service Propriété Intellectuelle
Immeuble le Delta
14, avenue des Béguines
95892 Cergy Pontoise (FR)**

(54) **MÉTHODE DE COMMANDE D'UN CHARGEUR D'UNITÉ DE STOCKAGE D'ÉNERGIE ÉLECTRIQUE DE VÉHICULE, ET CHARGEUR**

(57)     Méthode de commande d'un chargeur (1) d'unité de stockage d'énergie électrique de véhicule, le chargeur (1) comprenant :
- un connecteur (3) apte à être branché à un réseau électrique apte à fournir une tension alternative triphasée,
- un onduleur/redresseur (6), comprenant un premier, un deuxième et un troisième bras (7) de commutation (7) montés en parallèle, chaque bras de commutation (7) comprenant deux interrupteurs électroniques commandables (8) disposés de part et d'autre d'un point milieu (9) apte à être connecté à une phase respective de la tension alternative,
- un quatrième bras de commutation (10) monté en parallèle des premier, deuxième et troisième bras de commutation (7) de l'onduleur/redresseur (6), ce quatrième bras de commutation (10) comprenant deux interrupteurs (11) disposés de part et d'autre d'un quatrième point milieu (12) apte à être connecté au neutre du réseau électrique, et
- une branche (13) montée en parallèle desdits bras de commutation (7, 10), comprenant deux condensateurs (14) disposés de part et d'autre d'un cinquième point milieu (15), un interrupteur (21) étant monté en série entre le quatrième (12) et le cinquième (15) point milieu, la méthode comprenant :
- la détermination (110) de la valeur du courant au neutre,
- la détermination (111) d'un signal de contrôle, de manière à permettre la régulation de la tension entre le cinquième point milieu et la masse, et la régulation du courant au neutre, et
- la détermination (107) de rapports cycliques pour les interrupteurs électroniques commandables des premier, deuxième et troisième bras de commutation sur la base du signal de contrôle.

[Fig 2]

**Description**

La présente invention concerne une méthode de commande d'un chargeur d'unité de stockage d'énergie électrique de véhicule, et elle concerne également un tel chargeur. L'unité de stockage d'énergie électrique est par exemple une batterie, pouvant présenter une tension nominale supérieure à 60V, par exemple supérieure ou égale à 300V, à 400V, à 800V, voire à 1000V.

Le chargeur comprend dans un exemple connu :

- un onduleur/redresseur recevant en entrée une tension alternative triphasée d'une borne de charge et fournissant en sortie une tension continue, et
- un convertisseur DC/DC disposé en aval de l'onduleur/redresseur et connecté à l'unité de stockage d'énergie électrique.

Un tel onduleur/redresseur met en œuvre une pluralité d'interrupteurs électroniques commandables tels que des transistors MOSFET ou des IGBT.

Il est connu de commander un tel onduleur/redresseur en contrôlant les courants de phase et la tension continue entre l'onduleur/redresseur et le convertisseur DC/DC, en faisant varier la valeur des rapports cycliques appliqués aux trois bras de commutation de l'onduleur/redresseur. Le convertisseur DC/DC est commandé de manière à suivre la demande de puissance depuis l'unité de stockage d'énergie électrique.

Les chargeurs connus peuvent comprendre un quatrième bras de commutation relié au neutre du réseau électrique. Il est alors nécessaire de commander l'onduleur/redresseur de manière à garantir autant que possible que la somme des courants de phase soit nulle, pour éviter une injection de la troisième harmonique du courant homopolaire dans le réseau.

Il existe un besoin pour remédier à l'inconvénient précité à l'aide d'une solution qui soit simple à mettre en œuvre, évitant notamment l'emploi de capteurs additionnels, et qui soit suffisamment précise.

L'invention vise à répondre à ce besoin et elle y parvient, selon l'un de ses aspects, à l'aide d'une méthode de commande d'un chargeur d'unité de stockage d'énergie électrique de véhicule, le chargeur comprenant :

- un connecteur apte à être branché à un réseau électrique apte à fournir une tension alternative triphasée,
- un onduleur/redresseur, comprenant un premier, un deuxième et un troisième bras de commutation montés en parallèle, chaque bras de commutation comprenant deux interrupteurs électroniques commandables disposés de part et d'autre d'un point milieu apte à être connecté à une phase respective de la tension alternative,
- un quatrième bras de commutation monté en parallèle des premier, deuxième et troisième bras de commutation de l'onduleur/redresseur, ce quatrième bras de commutation comprenant deux interrupteurs disposés de part et d'autre d'un quatrième point milieu apte à être connecté au neutre du réseau électrique, et
- une branche montée en parallèle desdits bras de commutation, comprenant deux condensateurs disposés de part et d'autre d'un cinquième point milieu, un interrupteur étant monté en série entre le quatrième et le cinquième point milieu,

la méthode comprenant :

- la détermination de la valeur du courant au neutre,
- la détermination d'un signal de contrôle, de manière à permettre : la régulation de la tension entre le cinquième point milieu et la masse, et la régulation du courant au neutre, et
- la détermination de rapports cycliques pour les interrupteurs électroniques commandables des premier, deuxième et troisième bras de commutation sur la base du signal de contrôle.

L'invention consiste à prendre en compte, pour commander les premier, deuxième et troisième bras de commutation de l'onduleur/redresseur :

- l'équilibrage entre : la tension aux bornes de l'un des deux condensateurs de la branche en parallèle des bras de commutation, et la tension aux bornes de l'autre des deux condensateurs de cette branche, et
- la régulation du courant au neutre.

On réduit ainsi la valeur du courant au neutre en régulant la valeur de la tension entre le cinquième point milieu et la masse.

Chaque interrupteur électronique commandable d'un des premier, deuxième et troisième bras de commutation peut être de même type, étant par exemple des transistors IGBT ou des transistors MOSFET.

Chaque interrupteur électronique du quatrième bras de commutation est par exemple différent des interrupteurs des premier, deuxième et troisième bras de commutation. Il s'agit par exemple d'une diode, par exemple une diode dite « fast time recovery » (ou FTR) ou d'un autre type d'interrupteur électronique non commandable. En variante, des transistors IGBT peuvent être utilisés pour réaliser les interrupteurs du quatrième bras de commutation.

Les deux condensateurs de la branche montée en parallèle des bras de commutation peuvent avoir la même capacité, cette dernière étant par exemple comprise entre 1000 μF et 2000 μF, comme on le verra par la suite.

La présence du quatrième bras de commutation en parallèle des bras de commutation de l'onduleur/redresseur et dont le point milieu est apte à être connecté au neutre permet d'utiliser ce quatrième bras de commutation pour un redressement monophasé lorsque la borne de charge fournit une tension monophasée.

La présence de l'interrupteur monté en série entre le quatrième et le cinquième point milieu contribue à la possibilité d'un fonctionnement avec une tension fournie par la borne de charge qui est monophasée. Cet interrupteur peut être :

- commandé en ouverture pour déconnecter le quatrième et le cinquième point milieu avec une tension monophasée, de sorte que le courant au neutre circule via le quatrième bras, et
- commandé au moins séquentiellement en fermeture avec une tension triphasée, de sorte que le courant au neutre circule via la branche.

On bénéficie ainsi d'un chargeur permettant :

- une charge triphasée via les trois phases de la tension alternative et les trois bras de commutation de l'onduleur/redresseur, et
- une charge monophasée en utilisant le neutre de la tension alternative et le quatrième bras de commutation.

Dans tout ce qui précède, le quatrième point milieu peut être relié à un conducteur électrique apte à être connecté au neutre du réseau électrique, et le courant circulant dans ce conducteur électrique est le « courant au neutre » selon l'invention.

L'interrupteur monté en série entre le quatrième et le cinquième point milieu est par exemple un relais électrotechnique. L'invention n'est cependant pas limitée à un tel exemple, d'autres interrupteurs étant possibles, par exemple un relais statique à base de coupleurs optiques et/ou de transistors MOSFET et/ou de transistors IGBT.

La régulation de la tension entre le cinquième point milieu et la masse, et la régulation du courant au neutre peuvent être une régulation cascade mettant en œuvre deux boucles imbriquées. La régulation de la tension entre le cinquième point milieu et la masse peut se faire à l'aide de la boucle externe, et la régulation du courant au neutre peut se faire à l'aide de la boucle interne.

La boucle interne peut comprendre un correcteur, notamment un correcteur proportionnel-intégral, et la méthode peut comprendre une sous-étape d'application dynamique d'une valeur de saturation variable lorsque la valeur du signal en sortie de ce correcteur dépasse une valeur seuil, le signal de contrôle prenant alors la valeur de saturation. La valeur seuil peut être variable également. Le cas échéant, la valeur seuil est égale à la valeur de saturation c'est-à-dire que dès que cette valeur seuil est atteinte, la valeur du signal en sortie du correcteur de la boucle interne sature à cette valeur seuil.

Le cas échéant, lorsque la valeur du signal en sortie du correcteur de la boucle interne atteint en valeur absolue la valeur seuil, cette valeur du signal en sortie du correcteur de la boucle interne sature à plus ou moins cette valeur seuil. Selon un exemple de mise en œuvre, on borne ainsi la valeur du signal en sortie du correcteur de la boucle interne entre deux valeurs opposées qui varient, ou non, de façon dynamique.

La mise en place de l'application d'une valeur de saturation variable de façon dynamique au signal en sortie du correcteur de la boucle interne permet une régulation du courant au neutre tout en restant compatible avec la commande des premier, deuxième et troisième bras de commutation pour convertir le courant AC en courant DC pour charger de façon efficace l'unité de stockage d'énergie électrique. On évite ainsi que la valeur du signal en sortie de ce correcteur ne prenne des valeurs telles que le signal de contrôle ait un poids trop important dans la détermination des rapports cycliques, ce qui affecterait alors l'aptitude de ces rapports cycliques à convertir le courant AC en courant DC pour la charge souhaitée. On priorise ainsi la commande des courants de phase de l'onduleur/redresseur.

Le fait de prévoir une valeur de saturation évoluant de façon dynamique peut permettre une meilleure adaptation à l'état du réseau électrique, compte-tenu des chutes de tension potentielles et/ou des problématiques d'harmoniques et/ou des variations de fréquence, qui peuvent impacter les courants de phase. Lorsque le correcteur de la boucle interne est un correcteur proportionnel-intégral, l'application d'une valeur de saturation dynamique pourrait être considérée comme un signal feedforward avec une sortie en tension afin d'éviter la saturation du terme « intégrale » du correcteur.

Le signal de contrôle peut, en cas de saturation, occuper plusieurs valeurs différentes, selon le cas.

L'invention n'est pas limitée à l'emploi d'un correcteur proportionnel-intégral dans la boucle interne, un correcteur proportionnel résonant pouvant en variante être utilisé.

La valeur de saturation dynamique peut être déterminée en fonction de la valeur de la différence entre :

- la tension aux bornes des bras de commutation, et
- le module du vecteur obtenu par transformée mathématique d'un système triphasé en un système diphasé, le système triphasé étant représentatif des tensions de phase du réseau électrique. Le module de ce vecteur peut correspondre à l'amplitude de la tension alternative du réseau électrique.

La transformée mathématique est par exemple une transformée de Clarke, de Concordia ou de Park.

La valeur de saturation dynamique peut être déterminée comme étant égale en valeur absolue à un pourcentage de la valeur de la différence précitée entre :

- la tension aux bornes des bras de commutation, et

- le module du vecteur obtenu par transformée mathématique d'un système triphasé en un système diphasé, le système triphasé étant représentatif des tensions de phase du réseau électrique.

Le pourcentage précité est par exemple inférieur ou égal à 10%, par exemple inférieur ou égal à 5%, par exemple de l'ordre de 2%.

La régulation de la tension entre le cinquième point milieu et la masse à l'aide de la boucle externe peut s'effectuer en comparant en entrée de cette boucle externe : le double d'une mesure de ladite tension entre le cinquième point milieu et la masse, et la valeur de la tension aux bornes des bras de commutation, et en fournissant sur la base de cette comparaison une valeur de consigne pour le courant au neutre.

La régulation du courant au neutre peut s'effectuer en comparant en entrée de la boucle interne : la valeur de consigne pour le courant au neutre, et la valeur du courant au neutre déterminée selon la méthode.

Dans tout ce qui précède, la détermination de rapports cycliques pour les interrupteurs électroniques commandables des premier, deuxième et troisième bras de commutation peut s'effectuer en combinant le signal de contrôle, ayant le cas échéant une valeur de saturation, avec des signaux de commande, par exemple des tensions, pour chaque bras de commutation.

Chaque rapport cyclique $\alpha_i$ s'obtient par exemple à l'aide de l'équation

$$[\text{Math1}] \quad \alpha_i = \frac{V_{iref} - v_{sat}}{V_{DC}} + 0,5$$

où :

- $v_{iref}$ est la tension de commande pour la phase i,
- $v_{sat}$ est la valeur du signal de contrôle, le cas échéant la valeur de saturation, et
- $V_{DC}$ est la valeur de la tension aux bornes des bras de commutation.

La présence du terme $v_{sat}$, causée par la présence du courant au neutre lorsque le réseau électrique n'est pas équilibré, modifie la génération classique de rapport cyclique pour contrôler les courants de phase. On évite ainsi l'injection de l'harmonique de rang 3 de ce courant au neutre dans le réseau.

La détermination de la valeur du courant au neutre peut comprendre l'application aux valeurs des courants de phase mesurées d'un filtre passe-bas. Ce filtre présente par exemple une fréquence de coupure de 10 Hz ou 2 Hz ou 1 Hz. La composante continue présente dans les mesures des courant de phase peut alors être soustraite des courants de phase tels qu'en amont du filtre passe-bas afin de déterminer, pour chaque courant de phase, un signal sans composante continue. La somme de ces trois courants de phase sans composante continue peut fournir le signal de courant qui sera comparé en entrée de la boucle interne au signal de sortie de la boucle externe. Cette étape de détermination du courant au neutre s'effectue ainsi avantageusement à l'aide d'un filtre classique.

L'invention a encore pour objet, selon un autre de ses aspects, un chargeur d'unité de stockage d'énergie électrique de véhicule, comprenant :

- un connecteur apte à être branché à un réseau électrique apte à fournir une tension alternative triphasée,
- un onduleur/redresseur, comprenant un premier, un deuxième et un troisième bras de commutation montés en parallèle, chaque bras de commutation comprenant deux interrupteurs électroniques commandables disposés de part et d'autre d'un point milieu apte à être connecté à une phase respective de la tension alternative,
- un quatrième bras de commutation monté en parallèle des premier, deuxième et troisième bras de commutation de l'onduleur/redresseur, ce quatrième bras de commutation comprenant deux interrupteurs disposés de part et d'autre d'un quatrième point milieu apte à être connecté au neutre du réseau électrique, et
- une branche montée en parallèle desdits bras de commutation, comprenant deux condensateurs disposés de part et d'autre d'un cinquième point milieu, un interrupteur étant monté en série entre le quatrième et le cinquième point milieu, et
- une unité de contrôle adaptée pour exécuter les étapes de la méthode ci-dessus.

Tout ce qui précède s'applique encore au chargeur selon cet autre aspect de l'invention.

L'onduleur/redresseur peut être configuré pour exercer une correction du facteur de puissance de la tension alternative (PFC en anglais). L'onduleur/redresseur utilise par exemple alors la topologie dite « totem-pôle ».

Le chargeur peut comprendre un convertisseur DC/DC monté en cascade avec le quatrième bras de commutation et la branche comprenant les deux condensateurs.

Ce convertisseur DC/DC comprend par exemple une isolation galvanique, notamment via un transformateur. Ce transformateur est par exemple un transformateur monophasé ou triphasé. Ce convertisseur DC/DC comprend de façon connue :

- un deuxième onduleur/redresseur monté entre la sortie continue du précédent onduleur/redresseur et le primaire du transformateur, et
- un troisième redresseur/onduleur ou un redresseur à diodes, monté entre le secondaire du transformateur et l'unité de stockage d'énergie électrique. Lorsqu'un troisième redresseur/onduleur est présent, il peut comprendre des transistors MOSFET permettant un redressement synchrone.

Le convertisseur DC/DC est par exemple un convertisseur résonant de type LLC ou CLLC.

Chaque condensateur de la branche montée en parallèle des bras de commutation est par exemple un condensateur électrolytique, présentant par exemple une capacité comprise entre 100 μF et 2000 μF, par exemple entre 1000 μF et 2000 μF. Ces condensateurs traitent par exemple des courants basse fréquence.

En parallèle du quatrième bras de commutation peut également être monté un autre bras comprenant uniquement un condensateur. Il s'agit par exemple d'un condensateur dont la capacité est de l'ordre de quelques centaines de nF. Ce condensateur vise notamment à réduire l'ondulation haute fréquence. Ce condensateur est par exemple en polypropylène ou en céramique.

L'unité de contrôle peut comprendre un microcontrôleur, ou un circuit intégré par exemple un FPGA ou un ASIC.

Dans tout ce qui précède, le chargeur peut comprendre un étage de filtrage du courant alternatif disposé en série entre le connecteur et l'onduleur/redresseur. Cet étage de filtrage permet par exemple, lorsque la tension alternative est polyphasée, un filtrage du courant de mode commun et/ou un filtrage du courant différentiel.

Dans tout ce qui précède, le chargeur peut comprendre un étage de filtrage du courant continu disposé en série entre le convertisseur DC/DC et l'unité de stockage d'énergie électrique.

Dans tout ce qui précède, la tension du réseau peut présenter une fréquence de 50 Hz ou 60 Hz et une valeur efficace de 230V ou 240V. Dans tout ce qui précède, l'unité de stockage d'énergie électrique est par exemple une batterie, pouvant présenter une tension nominale supérieure à 60V, par exemple supérieure ou égale à 300V, à 400V, à 800V, voire à 1000V.

Dans tout ce qui précède, le chargeur peut permettre de charger l'unité de stockage d'énergie électrique avec une puissance de 7kW, 11kW ou 22kW, voire plus.

Le chargeur peut être regroupé ou non dans un même boîtier avec un convertisseur DC/DC assurant une conversion de tension entre la tension aux bornes de l'unité de stockage d'énergie électrique, dite « haute tension », et la tension du réseau de bord, dite « basse tension ». Comme déjà mentionné, la haute tension est par exemple supérieure à 60V, par exemple supérieure ou égale à 300V, à 400V, à 800V, voire à 1000V tandis que la basse tension est par exemple égale à 12V ou à 48V.

L'invention a encore pour objet, selon encore un autre de ses aspects, un produit programme d'ordinateur comprenant des instructions qui conduisent le chargeur ci-dessus à exécuter les étapes de la méthode ci-dessus.

L'invention a encore pour objet, selon encore un autre de ses aspects, un support lisible par ordinateur, sur lequel est enregistré le programme d'ordinateur ci-dessus. Au sens de la présente demande, l'ordinateur pouvant lire le programme d'ordinateur est par exemple l'unité de contrôle précitée, le cas échéant via son microcontrôleur, ou son circuit intégré tel qu'un FPGA ou un ASIC.

Dans tout ce qui précède, le chargeur peut, ou non être réversible. Un chargeur réversible permet alors le transfert d'énergie électrique depuis l'unité de stockage d'énergie électrique vers le réseau électrique ou vers une charge branchée au connecteur du chargeur.

L'invention pourra être mieux comprise à la lecture de la description qui va suivre d'un exemple non limitatif de mise en œuvre de celle-ci et à l'examen du dessin annexé sur lequel :

- [Fig.1] représente un chargeur au sein duquel un exemple de méthode de commande selon l'invention peut être mis en œuvre,
- [Fig.2] est une vue similaire à la figure 1 dans laquelle les étapes de la méthode de commande sont représentées par des schémas blocs,
- [Fig.3] représente de façon isolée une des étapes de la méthode de commande,
- [Fig.4] représente de façon isolée une autre étape de la méthode de commande,
- [Fig.5] est une représentation différente de la figure 2, et
- [Fig.6] et [Fig.7] représentent des exemples de correcteurs pouvant être utilisés pour la boucle interne et la boucle externe mises en œuvre dans un exemple de méthode de commande.

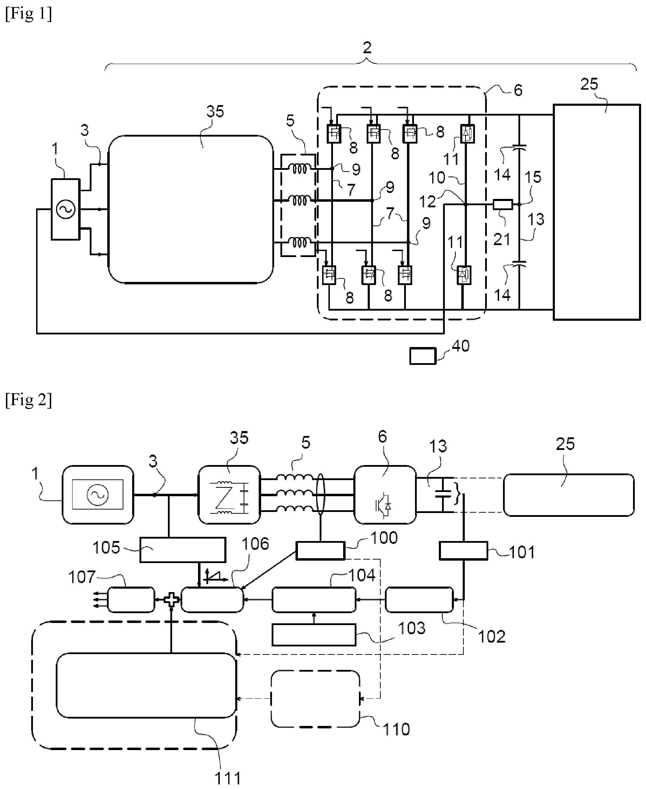

On a représenté sur la figure 1 un exemple de chargeur 2 d'une unité de stockage d'énergie électrique à partir d'un réseau électrique 1. L'unité de stockage d'énergie électrique est ici une batterie utilisée pour l'alimentation électrique d'une machine électrique de propulsion de véhicule. Cette batterie présente par exemple une tension nominale supérieure à 60V, notamment à 300V, notamment à 400V, notamment à 800V, voire à 1000V.

Le réseau électrique 1 est par exemple un réseau triphasé véhiculant une tension à une première fréquence qui est de 50Hz ou 60Hz et dont la valeur efficace est de 230V ou 240V. Le réseau électrique 1 est connecté au chargeur par l'intermédiaire d'un connecteur 3 représenté sur la figure 1 de manière schématique. Ce connecteur 3 comprend par exemple quatre contacts pour la connexion au réseau électrique, à savoir un contact par phase et un contact pour le neutre.

Le chargeur 2 comprend, dans cet exemple :

- un onduleur/redresseur 6, comprenant trois bras de commutation 7 montés en parallèle, chaque bras de commutation 7 comprenant deux interrupteurs électroniques commandables 8 disposés de part et d'autre d'un point milieu 9 apte à être connecté à une phase respective de la tension alternative du réseau électrique 1,

- un quatrième bras de commutation 10 monté en parallèle des bras de commutation 7, ce quatrième bras de commutation 10 comprenant deux interrupteurs 11 disposés de part et d'autre d'un quatrième point milieu 12 apte à être connecté au neutre du réseau électrique, et
- une branche 13 montée en parallèle desdits bras de commutation 7 et 10, comprenant deux condensateurs 14 disposés de part et d'autre d'un cinquième point milieu 15.

Tous les interrupteurs 8 sont ici des transistors MOSFET ou IGBT, et tous les interrupteurs 11 sont ici des diodes dites FTR.

Chaque point milieu 9 d'un des premier, deuxième et troisième bras de commutation 7 peut être connecté à une inductance 5, de manière à former un montage dit « totem pole ».

On constate que la branche 13 et les bras de commutation 7 et 10 sont montés entre deux bornes à potentiel continu. On constate également dans l'exemple considéré que le quatrième point milieu 12 est relié au cinquième point milieu 15 par l'intermédiaire d'un interrupteur 21. L'interrupteur 21 est ici un relais électrotechnique. En variante, d'autres exemples sont possibles, par exemple l'emploi de relais statiques à base de coupleurs optiques et/ou de transistors MOSFET et/ou de transistors IGBT.

Le chargeur 2 comprend encore dans l'exemple de la figure 1 un convertisseur DC/DC 25 qui est représenté ici de façon très schématique. Ce convertisseur DC/DC peut comprendre de façon connue deux convertisseurs DC/AC, notamment réversibles, et un transformateur d'isolation galvanique disposé entre ces deux convertisseurs DC/AC. Le convertisseur DC/DC est par exemple résonant, étant de type LLC ou CLLC, entre autres.

Comme représenté sur la figure 1, un étage de filtrage 35 du courant alternatif peut être prévu, cet étage de filtrage 35 étant ici disposé en série entre le connecteur 3 et l'onduleur/redresseur 6. Cet étage de filtrage 35 permet notamment dans le cas présent d'une tension alternative polyphasée un filtrage du courant de mode commun et/ou un filtrage du courant différentiel. Le cas échéant, et bien que non représenté sur les figures, un autre étage de filtrage du courant continu peut être présent, étant alors disposé en série entre le convertisseur DC/DC 25 et l'unité de stockage d'énergie électrique.

Le chargeur 2 comprend une unité de contrôle 40 dont le rôle va être décrit ci-après. Cette unité de contrôle 40 est par exemple réalisée à l'aide de plusieurs modules. Cette unité de contrôle 40 comprend par exemple des microcontrôleurs et/ou des circuits intégrés. Cette unité de contrôle 40 peut, comme représenté en référence à la figure 2 réaliser une commande de l'onduleur/redresseur 6 de façon à redresser le courant triphasé reçu du réseau électrique 1 tout en assurant une correction du facteur de puissance (« PFC » en anglais).

De façon connue, cette commande peut mettre en œuvre les étapes suivantes :

- en 100 : acquisition des courants de phase $i_a$, $i_b$ et $i_c$ au niveau de chaque inductance 5, et application à ces courants d'une transformée de Park,
- en 101 : acquisition de la tension $V_{DC}$ aux bornes des bras de commutation 7 et 10,
- en 102 : réalisation d'une boucle de contrôle de tension pour réguler la tension acquise en 101,
- en 103 : acquisition des tensions de phase $v_a$, $v_b$ et $v_c$ du réseau 1, et de la tension et du courant de l'unité de stockage d'énergie électrique, et application aux tensions de phase de la transformée de Park,
- en 104 : calcul d'un courant de consigne pour les courants de phase en prenant en compte l'équilibrage de puissance entre l'onduleur/redresseur 6 et le convertisseur DC/DC 25,
- en 105 : réalisation d'une boucle à phase asservie pour les tensions de phase, par calcul de l'angle permettant de définir la consigne pour les courants de phase afin de synchroniser le courant et la tension pour chaque phase dans le cadre de l'amélioration du facteur de puissance,
- en 106 : réalisation d'une boucle de contrôle des courants de phase et de compensation de la puissance réactive, cette boucle de contrôle mettant par exemple en œuvre une transformée de Park inverse pour calculer les consignes pour les courants de phase, et
- en 107 : génération de rapports cycliques pour les interrupteurs 8 des premier, deuxième et troisième bras de commutation 7 de l'onduleur/redresseur 6.

Les étapes précédentes sont par exemple connues de la publication IEEE « Operation Modes for the Electric Vehicle in Smart Grids and Smart Homes: Present and Proposed Modes (https://ieeexplore.ieee.org/document/7273953)

Selon l'invention, et comme cela va maintenant être décrit en référence aux figures 2 à 7, la commande mise en œuvre par l'unité de contrôle 40 permet également :

- selon l'étape 110 : la détermination de la valeur du courant au neutre, et
- selon l'étape 111 : la détermination d'un signal de contrôle, de manière à permettre la régulation de la tension entre le cinquième point milieu 15 et la masse, et la régulation du courant au neutre.

La détermination de rapports cycliques en 107 s'effectue alors en prenant également en compte le signal de contrôle à l'issue de l'étape 111. Ainsi, la commande des interrupteurs 8 des bras de commutation 7 permet la régulation de la tension entre le cinquième point milieu 15 et la masse, et la réduction du courant au neutre.

On peut ainsi :

- avoir un équilibrage entre la tension aux bornes de l'un des deux condensateurs 14 de la branche 13 et la tension aux bornes de l'autre des deux condensateurs 14 de cette branche 13, et
- réduire, voire supprimer la troisième harmonique du courant au neutre.

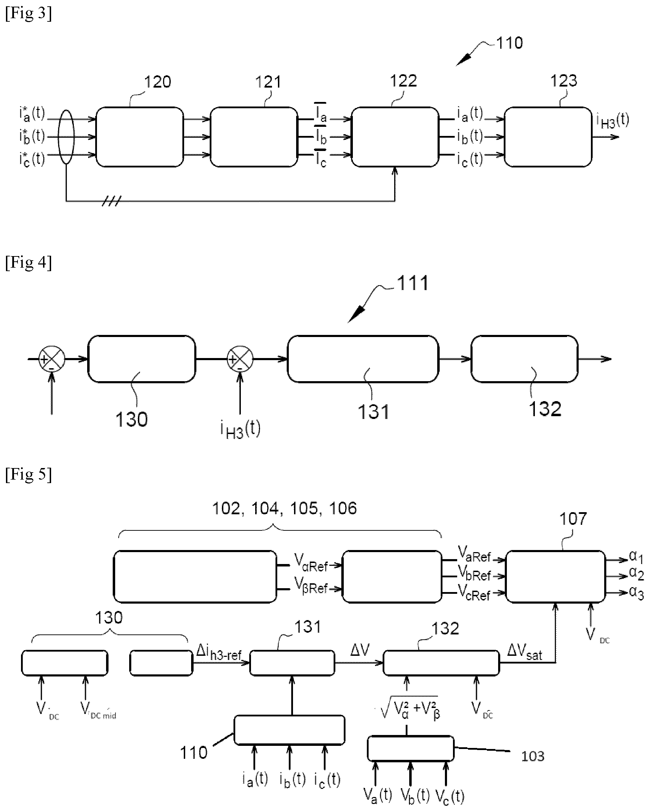

On va maintenant décrire de manière plus précise les étapes 110 et 111 en référence aux figures 3 à 7.
Selon une sous-étape 120, un filtre matériel est appliqué aux mesures de courant obtenues en 100. Selon une sous-étape 121, un filtre passe-bas est appliqué aux mesures de courant résultant de la sous-étape 120. Ce filtre passe-bas a par exemple une fréquence de coupure de 1 Hz ou 2 Hz, et on récupère en sortie de ce filtre la composante continue présente dans les mesures des courant de phase.
Selon une sous-étape 122, on soustrait, pour chaque mesure de courant de phase en amont de la sous-étape 120, la composante continue présente pour cette mesure de courant de phase obtenue à l'issue de la sous-étape 121.
Enfin, selon une sous-étape 123, on additionne sur l'ensemble des phases le signal obtenu à l'issue de la sous-étape 122. On obtient ainsi un signal représentatif du courant au neutre.
On va maintenant décrire en référence aux figures 4 et 5 l'étape 111. Cette étape 111 met ici en œuvre une régulation cascade avec deux boucles imbriquées.
Selon une sous-étape 130, on régule la tension entre le cinquième point milieu 15 et la masse à l'aide d'une boucle externe comparant en son entrée :

- le double d'une mesure de la tension entre le cinquième point milieu 15 et la masse, cette mesure étant par exemple fournie par un capteur additionnel ou estimée par un estimateur, et
- la valeur de la tension $V_{DC}$ aux bornes des bras de commutation 7 et 10, acquise selon 101.

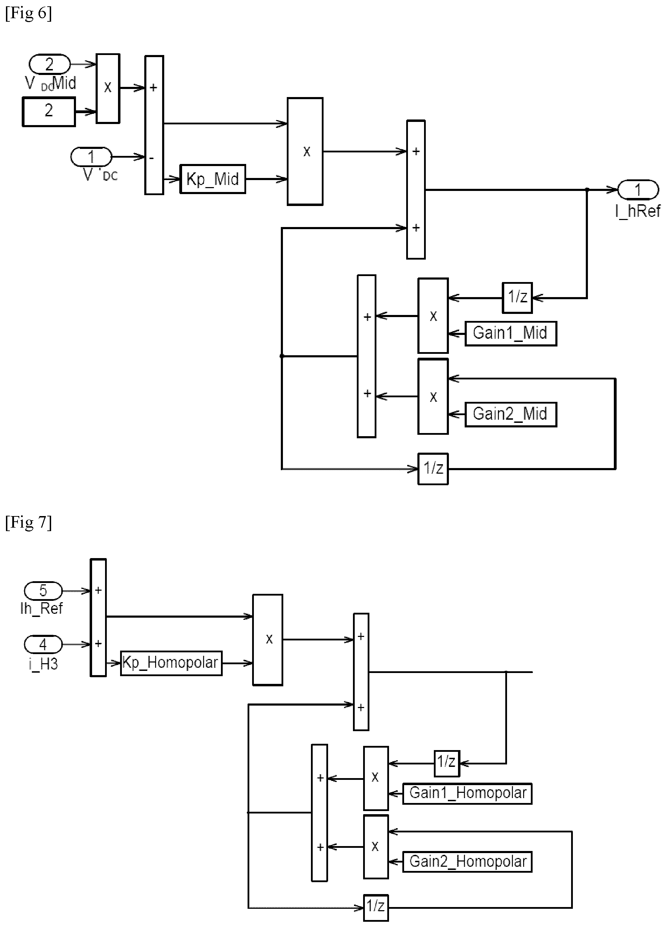

La boucle externe selon cette sous-étape 130 met par exemple en œuvre un correcteur proportionnel-intégral tel que celui représenté sur la figure 6. Une saturation de valeur fixe peut être appliquée au signal issu de ce correcteur proportionnel-intégral.
A l'issue de cette sous-étape 130, on obtient alors une valeur de consigne pour le courant au neutre.
Selon un sous-étape 131, on régule le courant au neutre de façon à réduire ce dernier et éviter la propagation de la troisième harmonique de ce courant au neutre dans le réseau électrique 1, à l'aide d'une boucle interne comparant en son entrée :

- la valeur de consigne pour le courant au neutre obtenue à l'issue de la sous-étape 130, et
- la valeur du signal représentatif du courant au neutre obtenue à l'issue de l'étape 110.

La boucle interne selon cette sous-étape 131 met par exemple en œuvre un correcteur proportionnel-intégral tel que celui représenté sur la figure 7.
A l'issue de cette sous-étape 131, on obtient en sortie un signal en tension régulant le courant au neutre.
L'étape 111 comprend encore ici une autre sous-étape additionnelle 132 d'application dynamique d'une valeur de saturation variable lorsque la valeur en sortie du correcteur dépasse une valeur seuil, le signal de contrôle prenant alors la valeur de saturation.
Lors de cette sous-étape 132, la valeur absolue du signal en sortie du correcteur est comparée avec une valeur seuil. Si la valeur du signal en sortie du correcteur est inférieure à la valeur seuil, elle est conservée telle quelle à l'issue de la sous-étape 132 et constitue la valeur du signal de contrôle utilisé lors de l'étape 107 modifiée selon l'invention. Si la valeur du signal en sortie du correcteur atteint en valeur absolue la valeur seuil, elle sature dans l'exemple considéré à cette valeur seuil en positif ou en négatif et cette valeur saturée déterminée de façon dynamique constitue alors la valeur du signal de contrôle appliquée lors de l'étape 107 modifiée selon l'invention.
La valeur seuil qui est ici la valeur de saturation est dans l'exemple considérée déterminée de manière à être égale à un pourcentage de la différence entre :

- la tension $V_{DC}$ aux bornes des bras de commutation 7, 10, et
- le module du vecteur obtenu par transformée mathématique du système triphasé formé par les tensions de phase du réseau électrique en un système diphasé. Ce module correspond ici à l'amplitude de la tension alternative du réseau électrique.

La transformée mathématique est par exemple la transformée de Park qui est appliquée en 103 aux tensions de phase $v_a$, $v_b$ et $v_c$, comme déjà mentionné ci-dessus. De façon connue, le module du vecteur $[v\alpha, v\beta]$ obtenu à l'aide de la transformée de Park précitée est égal à $\sqrt{v_\alpha^2 + v_\beta^2}$ .
En sortie de la sous-étape 132, on borne ainsi la valeur du signal en sortie du correcteur à l'issue de la sous-étape 131 entre -M fois la différence précitée et +M fois cette différence.
A titre d'exemple, en considérant :

- une valeur de 2% pour M,
- une tension de valeur efficace de 230V pour chaque tension de phase,
- une valeur de 700V pour la tension $V_{DC}$ aux bornes des bras de commutation 7, 10, on obtient les valeurs de -7,5V et de +7,5V comme bornes pour la variation du signal à l'issue de la sous-étape 132. Une saturation est appliquée de façon dynamique.

Le signal à l'issue de cette sous-étape 132 est ensuite pris en compte lors de l'étape 107 pour déterminer les rapports cycliques à appliquer à chaque bras de commutation 7 selon l'équation suivante, pour chaque phase i :

$$[\text{Math2}] \ \alpha_i = \frac{v_{iref} - v_{sat}}{v_{DC}} + 0{,}5$$

où :

- $v_{iref}$ est la tension de commande pour la phase i telle que générée lors de l'étape 106 lors de laquelle la transformée de Park inverse est appliquée à un vecteur de tension de commande à deux composantes,
- $v_{sat}$ est la valeur du signal de contrôle à l'issue de la sous-étape 132, le cas échéant avec une valeur de saturation.

Toujours avec l'exemple numérique ci-dessus, une valeur de $v_{sat}$ égale à 7,5V correspond à un écart de valeur de rapport cyclique de 0,01 par rapport à la valeur de rapport cyclique à l'étape 107 selon l'art antérieur.

Bien entendu, si les valeurs des tensions de phase et de la tension $V_{DC}$ aux bornes des bras de commutation 7, 10 changent, par exemple compte-tenu de l'état du réseau électrique, la valeur de saturation et l'écart de rapport cyclique variera de façon dynamique.

L'invention n'est pas limitée à l'exemple qui vient d'être décrit.

Le cas échéant, on applique également de façon dynamique une valeur de saturation au signal en sortie du correcteur de la boucle externe à l'issue de la sous-étape 130.

**Revendications**

1. Méthode de commande d'un chargeur (1) d'unité de stockage d'énergie électrique de véhicule, le chargeur (1) comprenant :

   - un connecteur (3) apte à être branché à un réseau électrique apte à fournir une tension alternative triphasée,
   - un onduleur/redresseur (6), comprenant un premier, un deuxième et un troisième bras (7) de commutation (7) montés en parallèle, chaque bras de commutation (7) comprenant deux interrupteurs électroniques commandables (8) disposés de part et d'autre d'un point milieu (9) apte à être connecté à une phase respective de la tension alternative,
   - un quatrième bras de commutation (10) monté en parallèle des premier, deuxième et troisième bras de commutation (7) de l'onduleur/redresseur (6), ce quatrième bras de commutation (10) comprenant deux interrupteurs (11) disposés de part et d'autre d'un quatrième point milieu (12) apte à être connecté au neutre du réseau électrique, et
   - une branche (13) montée en parallèle desdits bras de commutation (7, 10), comprenant deux condensateurs (14) disposés de part et d'autre d'un cinquième point milieu (15), un interrupteur (21) étant monté en série entre le quatrième (12) et le cinquième (15) point milieu,

   la méthode comprenant :

   - la détermination (110) de la valeur du courant au neutre,
   - la détermination (111) d'un signal de contrôle, de manière à permettre la régulation de la tension entre le cinquième point milieu et la masse, et la régulation du courant au neutre, et
   - la détermination (107) de rapports cycliques pour les interrupteurs électroniques commandables (8) des premier, deuxième et troisième bras de commutation (7) sur la base du signal de contrôle.

2. Méthode selon la revendication 1, dans laquelle la régulation de la tension entre le cinquième point milieu (15) et la masse, et la régulation du courant au neutre est une régulation cascade mettant en œuvre deux boucles imbriquées, et dans laquelle on régule (130) la tension entre le cinquième point milieu (15) et la masse à l'aide de la boucle 30 externe, et dans laquelle on régule (131) le courant au neutre à l'aide de la boucle interne.

3. Méthode selon la revendication 2, la boucle interne comprenant un correcteur, notamment un correcteur proportionnel-intégral, et la méthode comprenant une sous-étape (132) d'application dynamique d'une valeur de saturation variable lorsque la valeur en sortie de ce correcteur dépasse une valeur seuil, le signal de contrôle prenant alors la valeur de 35 saturation.

4. Méthode selon la revendication 3, la valeur seuil étant égale à la valeur de saturation.

5. Méthode selon la revendication 3 ou 4, la valeur de saturation étant déterminée de façon dynamique en fonction de la valeur de la différence entre :

   - la tension ($V_{DC}$) aux bornes des bras de commutation (7, 10), et

- le module du vecteur obtenu par transformée mathématique d'un système triphasé en un système diphasé, le système triphasé étant représentatif des tensions de phase du réseau électrique (1).

6. Méthode selon l'une quelconque des revendications 2 à 5, la régulation de la tension entre le cinquième point milieu (15) et la masse à l'aide de la boucle externe s'effectuant en comparant en entrée de cette boucle externe : le double d'une mesure de ladite tension entre le cinquième point milieu (15) et la masse, et la valeur de la tension aux bornes des bras de commutation (7, 10), et en fournissant sur la base de cette comparaison une valeur de consigne pour le courant au neutre.

7. Méthode selon la revendication 6, la régulation du courant au neutre s'effectuant en comparant en entrée de la boucle interne : la valeur de consigne pour le courant au neutre, et la valeur du courant au neutre déterminée.

8. Méthode selon l'une quelconque des revendications précédentes, dans laquelle la détermination de rapports cycliques pour les interrupteurs électroniques commandables (8) des premier, deuxième et troisième bras de commutation (7) s'effectue en combinant le signal de contrôle, ayant le cas échéant une valeur de saturation, à des signaux de commande pour chaque bras de commutation (7).

9. Méthode selon l'une quelconque des revendications précédentes, dans laquelle la détermination de la valeur du courant au neutre comprend l'application aux valeurs des courants de phase mesurées d'un filtre passe-bas.

10. Chargeur (1) d'unité de stockage d'énergie électrique de véhicule, comprenant :

- un connecteur (3) apte à être branché à un réseau électrique apte à fournir une tension alternative triphasée,
- un onduleur/redresseur (6), comprenant un premier, un deuxième et un troisième bras de commutation (7) montés en parallèle, chaque bras de commutation (7) comprenant deux interrupteurs électroniques commandables (8) disposés de part et d'autre d'un point milieu (9) apte à être connecté à une phase respective de la tension alternative,
- un quatrième bras de commutation (10) monté en parallèle des premier, deuxième et troisième bras de commutation (7) de l'onduleur/redresseur (6), ce quatrième bras de commutation (10) comprenant deux interrupteurs (11) disposés de part et d'autre d'un quatrième point milieu (12)

apte à être connecté au neutre du réseau électrique, et
- une branche (13) montée en parallèle desdits bras de commutation (7, 10), comprenant deux condensateurs (14) disposés de part et d'autre d'un cinquième point milieu (15), un interrupteur (21) étant monté en série entre le quatrième (12) et le cinquième (15) point milieu, et
- une unité de contrôle (40) adaptée pour exécuter les étapes de la méthode selon l'une quelconque des revendications précédentes.

11. Produit programme d'ordinateur comprenant des instructions qui conduisent le chargeur (1) selon la revendication 10 à exécuter les étapes de la méthode selon l'une quelconque des revendications 1 à 9.

12. Support lisible par ordinateur, sur lequel est enregistré le programme d'ordinateur selon la revendication 11.

[Fig 1]

[Fig 2]

[Fig 3]

[Fig 4]

[Fig 5]

[Fig 6]

[Fig 7]

# EP 4 687 273 A1

Europäisches Patentamt

European Patent Office

Office européen des brevets

## RAPPORT DE RECHERCHE EUROPEENNE

Numéro de la demande

EP 25 19 2786

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ?ELIK DOGAN ET AL: "A coordinated virtual impedance control scheme for three phase four leg inverters of electric vehicle to grid (V2G)", 1 février 2022 (2022-02-01), ENERGY, ELSEVIER, AMSTERDAM, NL, XP086995020, ISSN: 0360-5442 [extrait le 2022-02-01] | 1-4,6-12 | INV.<br>H02M1/00<br>H02M7/219<br>H02M1/10 |
| A | * page 3 - page 8; figures 1,2,7 *<br>----- | 5 | |
| A | EP 3 886 304 A1 (DELTA ELECTRONICS SHANGHAI CO [CN]) 29 septembre 2021 (2021-09-29) * alinéa [0025]; figures 1,2 *<br>----- | 1-12 | |
| A | MURAD MOHAMMED AHSAN ADIB ET AL: "Modeling and Simulation of Variable Limits on Conditional Anti-Windup PI Controllers for VSC-Based Devices", IEEE TRANSACTIONS ON CIRCUITS AND SYSTEMS I: REGULAR PAPERS, IEEE, US, vol. 68, no. 7, 23 avril 2021 (2021-04-23), pages 3079-3088, XP011858174, ISSN: 1549-8328, DOI: 10.1109/TCSI.2021.3073103 [extrait le 2021-06-03] * page 3079 - page 3083; figures 1-5 *<br>----- | 1-12 | DOMAINES TECHNIQUES RECHERCHES (IPC)<br><br>H02M |
| | -/-- | | |

Le présent rapport a été établi pour toutes les revendications

| Lieu de la recherche | Date d'achèvement de la recherche | Examinateur |
|---|---|---|
| La Haye | 5 novembre 2025 | Gusia, Sorin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 25 19 2786

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LI HELONG ET AL: "A Control Scheme for a Combo 1-Ph/3-Ph PFC Rectifier With Improved Leg Utilizations", IEEE TRANSACTIONS ON POWER ELECTRONICS, INSTITUTE OF ELECTRICAL AND ELECTRONICS ENGINEERS, USA, vol. 38, no. 12, 18 septembre 2023 (2023-09-18), pages 15131-15136, XP011952337, ISSN: 0885-8993, DOI: 10.1109/TPEL.2023.3317178 [extrait le 2023-09-19] * page 15131 - page 15132; figure 1 * ----- | 1-12 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 5 novembre 2025 | Gusia, Sorin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

page 2 de 2

**EP 4 687 273 A1**

## ANNEXE AU RAPPORT DE RECHERCHE EUROPEENNE
## RELATIF A LA DEMANDE DE BREVET EUROPEEN NO.

EP 25 19 2786

05-11-2025

| Document brevet cité au rapport de recherche | | Date de publication | Membre(s) de la famille de brevet(s) | | Date de publication |
|---|---|---|---|---|---|
| EP 3886304 | A1 | 29-09-2021 | CN | 111355287 A | 30-06-2020 |
| | | | EP | 3886304 A1 | 29-09-2021 |
| | | | US | 2021296922 A1 | 23-09-2021 |